# EUROPÄISCHE PATENTSCHRIFT

(11) **EP 1 174 691 B1**
(45) Veröffentlichungstag und Bekanntmachung des Hinweises auf die Patenterteilung: **05.09.2007**
(21) Anmeldenummer: 01113785.8
(22) Anmeldetag: 06.06.2001
(51) Int. Cl.: G01F 15/14

(54) **Durchflussmess- und Anzeigeeinrichtung**
Flow measuring and display device
Dispositif de mesure et d'affichage de débit

(30) Priorität: 06.07.2000 DE 20011782 U
(43) Veröffentlichungstag der Anmeldung: 23.01.2002
(73) Patentinhaber: SIKA Dr.Siebert & Kühn GmbH & Co. KG., 34260 Kaufungen (DE)
(72) Erfinder: Ketelsen, Jörn-Uwe, 37139 Adelebsen (DE)
(74) Vertreter: WALTHER, WALTHER & HINZ Patentanwälte - European Patent Attorneys

(56) Entgegenhaltungen:
- DE-U- 20 006 078
- US-A- 5 339 686

## Beschreibung

Die Erfindung betrifft eine Durchflussmess- und Anzeigeeinrichtung für Wasser mit einem Gehäuse.

Durchflussmess- und Anzeigeeinrichtungen für Wasser sind beispielsweise in Form von Wasseruhren bekannt, die in eine Rohrleitung eingebaut werden. Derartige Wasseruhren werden üblicherweise im Keller in der Hauptwasserleitung angeordnet.

Nun ist es allerdings so, dass Wasser immer teurer wird und daher ein Interesse besteht festzustellen, welchen Wasserverbrauch beispielsweise ein Dusch- oder Badevorgang beinhaltet. Es sind daher auch bereits dezentrale Durchflussmess- und Anzeigeeinrichtungen bekannt. Diese werden häufig unmittelbar an die Wand aufgebracht und sind infolge dessen auf ihrer Rückseite mit einem Anschluss für die Wasserleitung und auf ihrer Vorderseite mit einem weiteren Anschluss für die Wasserentnahmeeinrichtung, beispielsweise für einen Wasserhahn oder für eine Brause, versehen.

Insofern ist bereits aus der US 5339686 A eine Anzeigeeinrichtung der eingangs genannten Art bekannt, die zwei Gehäuseteile umfasst, die mittels einem Bajonettverschluss untereinander verbindbar sind.

Es hat sich nun herausgestellt, dass die Wandoberfläche, insbesondere dann, wenn sie mit Fliesen versehen ist, die eine erhabene Oberflächengestaltung aufweisen, nicht eben ist. Soll somit eine Durchflussmess- und Anzeigeeinrichtung der eingangs genannten Art auf eine derart unebene Wand aufgebracht werden, so entsteht zwangsweise ein Spalt zwischen dem Gehäuse der Durchflussmess- und Anzeigeeinrichtung und der Wand. Ein solcher Spalt hinterlässt nicht nur optisch einen unschönen Eindruck, sondern birgt darüber hinaus die Gefahr, dass durch den Spalt und die Wandöffnung für die Leitung hindurch Wasser in die Wand eintritt.

Der Erfindung liegt daher die Aufgabe zugrunde, eine Durchflussmess- und Anzeigeeinrichtung der eingangs genannten Art bereitzustellen, mit der es möglich ist, Unebenheiten in der Wand auszugleichen, so dass das Gehäuse dieser Durchflussmess- und Anzeigeeinrichtung im Wesentlichen plan an der Wand anliegt.

Die Aufgabe wird erfindungsgemäß dadurch gelöst, dass das Gehäuse ein ringförmiges Außengehäuse aufweist, das ein inneres Gehäuseteil aufnimmt, wobei das innere Gehäuseteil von dem ringförmigen Außengehäuse im Wesentlichen senkrecht zur Gehäuseoberseite verschieblich aufnehmbar ist. Insbesondere dann, wenn das ringförmige Außengehäuse nur eine geringe Fläche zur Anlage an der Wand aufweist, ist es möglich, dass das Außengehäuse insgesamt keinen Spalt zur Wand aufweist, weil nämlich das innere Gehäuseteil, wenn in diesem Bereich Unebenheiten der Wand vorhanden sind, nach vorne aus dem ringförmigen Außengehäuse herausgedrückt wird, und zwar so weit, bis das ringförmige Außengehäuse plan an der Wand anliegt.

Nach einem besonderen Merkmal der Erfindung ist vorgesehen, dass das innere Gehäuseteil von dem ringförmigen äußeren Gehäuseteil verkippbar aufnehmbar ist; hierdurch wird erreicht, dass insbesondere dann, wenn die Wand nur punktuell Unebenheiten aufweist, und diese Unebenheiten gegebenenfalls bereits durch ein Verkippen des inneren Gehäuseteiles relativ zu dem ringförmigen Außengehäuse ausgeglichen werden können. Gleiches gilt vom Grundsatz auch dann, wenn der Ausfluss der Wasserleitung zu weit aus der Wand hervorsteht. Auch in diesem Fall ist es ausreichend, wenn das innere Gehäuseteil aus relativ zum äußeren Gehäuseteil, dem ringförmigen Außengehäuse, verschieblich ist.

Vorteilhaft ist das innere Gehäuseteil von dem ringförmigen Außengehäuse klemmbar aufnehmbar, wodurch erreicht wird, dass ohne besondere Hilfsmittel das innere Gehäuseteil von dem ringförmigen Außengehäuse stufenlos verschieblich aufnehmbar ist.

Das innere Gehäuseteil zeigt des Weiteren einen Display zur Anzeige des Wasserverbrauches; das innere Gehäuseteil besitzt darüber hinaus das Durchflussmessgerät, wobei das innere Gehäuseteil auf seiner Rück- und seiner Vorderseite jeweils einen Anschluss zur Anbringung an eine Rohrleitung bzw. eine Wasserentnahmestelle aufweist.

Anhand der Zeichnungen wird die Erfindung nachstehend beispielhaft näher erläutert.
- Figur 1: zeigt die Durchflussmess- und Anzeigeeinrichtung in einer Ansicht;
- Figur 2: zeigt einen Schnitt gemäß der Linie II - II aus Figur 1.

Das insgesamt mit 1 bezeichnete Gehäuse besteht aus einem ringförmigen Außengehäuse 2 und einem inneren Gehäuseteil 3. Hierbei nimmt das ringförmige Außengehäuse das innere Gehäuseteil 3 klemmbar mit seinem Innenmantelumfang auf. Das innere Gehäuseteil 3 besitzt ein Display 4 und auf seiner Vorder- und Rückseite jeweils einen Anschluss 5 bzw. 6 für eine Rohrleitung bzw. für eine Wasserentnahmestelle. Zwischen den beiden Anschlüssen 5 und 6 befindet sich das Durchflussmessgerät, das insgesamt mit 7 bezeichnet ist.

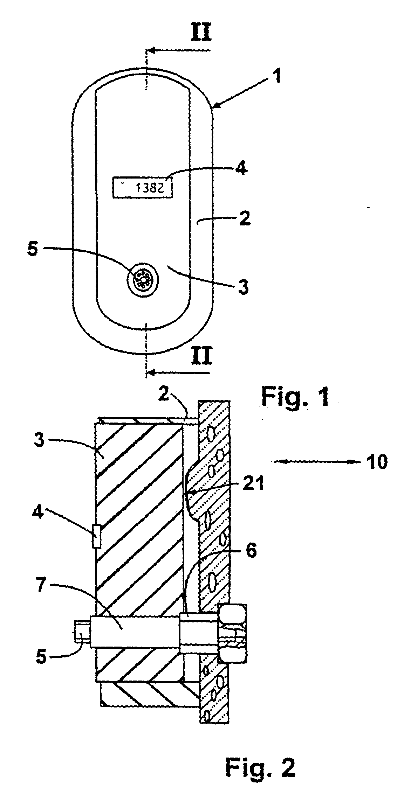

Wesentlich ist, dass das innere Gehäuseteil 3 gegenüber dem äußeren Gehäuseteil 2 in Richtung des Pfeiles 10 verschieblich ist, und zwar in beide Richtungen. Hierdurch können an der Wand vorhandene Unebenheiten 21 überbrückt werden, wie dies im Schnitt gemäß Figur 2 erkennbar ist.

## Patentansprüche

1. Durchflussmess- und Anzeigeeinrichtung für Wasser
mit einem Gehäuse,
**dadurch gekennzeichnet,**
**dass** das Gehäuse (1) ein ringförmiges Außengehäuse (2) und ein inneres Gehäuseteil (3) aufweist, wobei das innere Gehäuseteil (3) von dem ringförmigen Außengehäuse (2) im Wesentlichen senkrecht zur Gehäuseoberseite des Außengehäuses (2) verschieblich aufnehmbar ist.

2. Durchflussmess- und Anzeigeeinrichtung nach Anspruch 1,
**dadurch gekennzeichnet,**
**dass** das innere Gehäuseteil (3) von dem ringförmigen äußeren Gehäuseteil (2) verkippbar aufnehmbar ist.

3. Durchflussmess- und Anzeigeeinrichtung nach Anspruch 1,
**dadurch gekennzeichnet,**
**dass** das innere Gehäuseteil (3) von dem ringförmigen äußeren Gehäuseteil (2) klemmbar aufnehmbar ist.

4. Durchflussmess- und Anzeigeeinrichtung nach Anspruch 1,
**dadurch gekennzeichnet,**
**dass** das innere Gehäuseteil (3) ein Display (4) aufweist.

5. Durchflussmess- und Anzeigeeinrichtung nach Anspruch 1,
**dadurch gekennzeichnet,**
**dass** das innere Gehäuseteil (3) ein Durchflussmessgerät (7) aufweist, wobei das innere Gehäuseteil (3) auf seiner Rück- und Vorderseite jeweils einen Anschluss (5, 6) zur Anbringung an eine Rohrleitung bzw. an eine Wasserentnahmestelle aufweist.

## Claims

1. A flow metering and display device for water
in a housing,
**characterized in**
**that** said housing (1) comprises an annular outer housing (2) and an inner housing part (3), said inner housing part (3) being slidably receivable by the annular outer housing (2), substantially at right angles to the upper side of the outer housing (2).

2. The flow metering and display device as set forth in claim 1,
**characterized in**
**that** the inner housing part (3) is tiltably receivable by the annular outer housing part (2).

3. The flow metering and display device as set forth in claim 1,
**characterized in**
**that** the inner housing part (3) is clampingly receivable by the annular outer housing part (2).

4. The flow metering and display device as set forth in claim 1,
**characterized in**
**that** the inner housing part (3) comprises a display (4).

5. The flow metering and display device as set forth in claim 1,
**characterized in**
**that** the inner housing part (3) comprises a flow meter (7), said inner housing part (3) comprising respectively on its rear side and on its front side a connection (5, 6) for mounting to a tube or to a water tap point.

## Revendications

1. Dispositif faisant office de débitmètre et d'indicateur du débit d'eau
avec un boîtier,
**caractérisé en ce**
**que** le boîtier (1) comporte un boîtier externe (2) annulaire et une partie de boîtier interne (3), la partie de boîtier interne (3) étant apte à être reçue mobile en coulissement par le boîtier externe (2) annulaire, sensiblement perpendiculairement à la face supérieure du boîtier externe (2).

2. Dispositif faisant office de débitmètre et d'indicateur du débit d'eau selon la revendication 1,
**caractérisé en ce**
**que** la partie de boîtier (3) interne est apte à être reçue mobile en basculement par la partie de boîtier externe (2).

3. Dispositif faisant office de débitmètre et d'indicateur du débit d'eau selon la revendication 1,
**caractérisé en ce**
**que** la partie de boîtier (3) interne est apte à être reçue par serrage par la partie de boîtier externe (2).

4. Dispositif faisant office de débitmètre et d'indicateur du débit d'eau selon la revendication 1,
**caractérisé en ce**
**que** la partie de boîtier interne (3) comporte un écran (4).

5. Dispositif faisant office de débitmètre et d'indicateur du débit d'eau selon la revendication 1,
**caractérisé en ce**
**que** la partie de boîtier interne (3) comporte un débitmètre (7), la partie de boîtier interne (3) comportant sur sa face arrière ainsi que sur sa face avant un raccord respectif (5, 6) pour son montage sur une conduite ou sur une prise d'eau.
